# EUROPÄISCHE PATENTSCHRIFT

(11) **EP 2 476 869 B1**
(45) Veröffentlichungstag und Bekanntmachung des Hinweises auf die Patenterteilung: **05.04.2017**
(21) Anmeldenummer: 11000329.0
(22) Anmeldetag: 17.01.2011
(51) Int. Cl.: F01K 23/10, F01K 25/10, B01D 17/04, F16N 7/30

(54) **Schmierung volumetrisch arbeitender Expansionsmaschinen**
Lubrication of volumetric expansion machines
Lubrification de machines d'expansion fonctionnant de manière volumétrique

(43) Veröffentlichungstag der Anmeldung: 18.07.2012
(73) Patentinhaber: Orcan Energy AG, 81379 München (DE)
(72) Erfinder: Schuster, Andreas, 86874 Tussenhausen (DE); Aumann, Richard, 80796 München (DE); Sichert, Andreas, 81379 München (DE)
(74) Vertreter: Grünecker Patent- und Rechtsanwälte PartG mbB

(56) Entgegenhaltungen:
- WO-A2-2006/131759
- JP-A- 59 041 609
- JP-A- 2006 283 675

## Beschreibung

### Gebiet der Erfindung

Die vorliegende Erfindung betrifft ein Verfahren zur Schmierung volumetrisch arbeitender Expansionsmaschinen.

### Stand der Technik

Der Betrieb von Expansionsmaschinen, wie z.B. Dampfturbinen und beispielsweise mit Hilfe des Organic Rankine Cycle (ORC)-Verfahrens zur Erzeugung elektrischer Energie durch den Einsatz organischer Medien, beispielsweise organischer Medien mit niedriger Verdampfungstemperatur, die bei gleichen Temperaturen verglichen mit Wasser als Arbeitsmedium im allgemeinen höhere Verdampfungsdrücke aufweisen, ist im Stand der Technik bekannt. ORC-Anlagen stellen eine Realisierung des C lausius-Rankine-Kreisprozesses dar, in dem beispielsweise prinzipiell über adiabatische und isobare Zustandsänderungen eines Arbeitsmediums elektrische Energie gewonnen wird. Über Verdampfung, Expansion und anschließende Kondensation des Arbeitsmediums wird hierbei mechanische Energie gewonnen und in elektrische Energie gewandelt. Prinzipiell wird das Arbeitsmedium durch eine Speisepumpe auf Betriebsdruck gebracht, und es wird ihm in einem Verdampfer Energie in Form von Wärme, die durch eine Verbrennung oder einen Abwärmestrom zur Verfügung gestellt wird, zugeführt. Vom Verdampfer aus strömt das Arbeitsmedium über ein Druckrohr zu einer Expansionsmaschine, in der es auf einen niedrigeren Druck entspannt wird. Im Anschluss strömt der entspannte Arbeitsmediumsdampf durch einen Kondensator, in dem ein Wärmeaustausch zwischen dem dampfförmigen Arbeitsmedium und einem Kühlmedium stattfindet, wonach das auskondensierte Arbeitsmedium durch eine Speisepumpe zu dem Verdampfer in einem Kreisprozess zurückgeführt wird.

Eine besondere Klasse von Expansionsmaschinen stellen volumetrisch arbeitende Expansionsmaschinen dar, die auch als Verdrängungsexpansionsmaschinen bezeichnet werden, und eine Arbeitskammer umfassen und während einer Volumenzunahme dieser Arbeitskammer während der Entspannung des Arbeitsmediums Arbeit verrichten. Diese Expansionsmaschinen sind beispielsweise in Form von Kolbenexpansionsmaschinen, Schraubenexpansionsmaschinen oder Scrollexpandern realisiert. Derartige volumetrisch arbeitende Expansionsmaschinen werden insbesondere in ORC-Systemen kleiner Leistungsklasse (z.B. 1 bis 500kW elektrische Leistung) eingesetzt. Im Gegensatz zu Turbinen erfordern volumetrisch arbeitende Expansionsmaschinen jedoch eine Schmierung durch ein Schmiermittel insbesondere des Kolbens bzw. der sich aufeinander abwälzenden Profile des Expansionsraums sowie der Wälzlager und der gleitenden Wände der Arbeitskammer. Die Verwendung eines Schmiermittels führt vorteilhafterweise auch zu einer Abdichtung des Arbeitsraums der Expansionsmaschine, wodurch weniger Dampf durch Überströmen innerhalb der Expansionsmaschine verloren geht und somit der Wirkungsgrad erhöht wird.

In der WO 2006/131759 wird ein Flüssigabscheider für das Abscheiden der flüssigen Komponenten von den dampfförmigen Komponenten eines Gemisches aus Arbeitsmedium und Schmiermittel in einem Dampfkraftwerk beschrieben.

In der JP 59 041609 A wird ein Dampfkraftwerk mit einer Expansionskammer und einem separaten Anschluss für die Schmierung der Expansionskammer beschrieben.

In der JP 2006 283675 A wird ein Dampfkraftwerk mit einem Abscheider, welcher zwischen einem Verdampfer und einer Turbine vorgesehen ist, beschrieben, wobei druch den Abscheider ein flüssiges Gemisch aus Arbeitsmedium und Schmieröl aus dem von dem Verdampfer gelieferten Gemisch aus gasförmigen und dampfförmigen Komponenten, bestehend aus Arbeitsmedium und Schmieröl, abgeschieden wird.

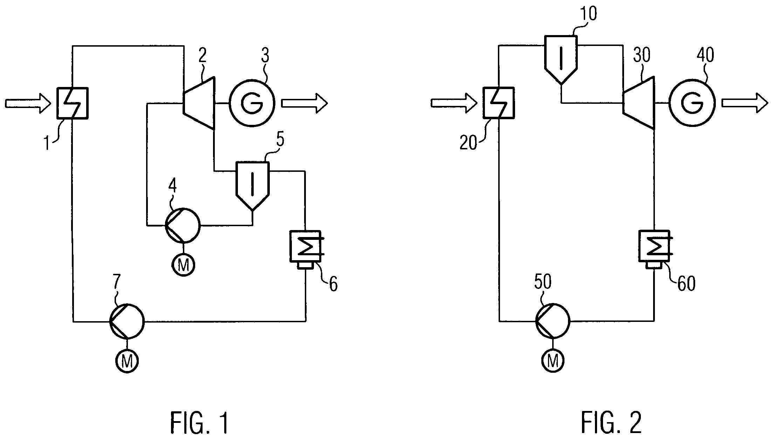

Figur 1 stellt eine Prinzipskizze eines Schmiersystems des Stands der Technik dar. Ein Arbeitsmedium wird von einem Verdampfer 1 zu einer Expansionsmaschine 2 geliefert. In der Expansionsmaschine 2 wird das dampfförmige Arbeitsmedium entspannt und es wird über einen Generator 3 die freigewordene Energie in elektrische Energie gewandelt. Über eine Ölkreispumpe 4 wird der Expansionsmaschine 2 ein Schmiermittel, beispielsweise ein Schmieröl, zugeführt. Das Schmiermittel verlässt gemeinsam mit dem entspannten Arbeitsmedium die Expansionsmaschine 2. Das Schmiermittel liegt in Form eines fein verteilten Ölnebels im entspannten Arbeitsmedium vor und wird in einem Ölabscheider 5 vom Arbeitsmedium getrennt, so dass dieses im wesentlichen ölfrei aus dem Ölabscheider 5 zu einem Kondensator 6 geliefert wird. Das kondensierte Arbeitsmedium wird durch eine Speisepumpe 7 dem Verdampfer 1 wieder zugeführt. Das rückgewonnene Öl wird über die Ölkreispumpe 4 der Expansionsmaschine 2 wieder zugeführt.

Das Schmiersystem des Stands der Technik weist jedoch die folgenden Nachteile auf. Da das Schmiermittel (Schmieröl) auf der Niederdruckseite nach Passieren der Expansionsmaschine 2 abgetrennt wird, ist das Vorsehen der Ölkreispumpe 4 erforderlich, die, da das Schmiermittel auf der Hochdruckseite der Expansionsmaschine 2 zuzuführen ist, die gleiche Druckdifferenz wie die das Arbeitsmedium transportierende Speisepumpe 7 zu überwinden hat, woraus ein hoher apparativer Aufwand mit entsprechenden Kosten resultiert. Zudem ist ein relativ großer Ölabscheider 5 vonnöten, da der die Expansionsmaschine 2 verlassende Abdampf eine im Vergleich zum der Expansionsmaschine 2 zugeführten Frischdampf geringere Dichte, beispielsweise um mehr als eine Größenordnung geringere Dichte, aufweist. Weiterhin wird die Trennung des Schmiermittels von dem Abdampf des Arbeitsmediums mithilfe von Zyklonenabscheidern oder Prallplatten, stets unter signifikanter Richtungsänderung des das Schmiermittel enthaltenden Abdampfstroms, ausgeführt, wodurch, kombiniert mit den relativ großen Volumina der Abdampfströmung, Druckverluste auftreten, die zu einem auf die Expansionsmaschine 2 wirkenden Gegendruck und damit zu einer Verringerung des Wirkungsgrads derselben führen.

Zudem weist der relativ große Ölabscheider 5 aufgrund der relativ großen Masse bzw. des relativ großen Volumens des Abdampfes eine gewisse Trägheit auf, die sich beim Anfahren der Anlage oder Lastwechseln unvorteilhaft auswirkt. Auch verringert das dem Frischdampf i.a. im flüssigen Zustand mit ungefähr der Temperatur des Abdampfes in den Frischdampf eingedüste Schmiermittel unerwünschterweise die Frischdampftemperatur und Frischdampfenthalpie.

Es besteht somit ein Bedarf dafür und es liegt somit der vorliegenden Erfindung als Aufgabe zugrunde, ein Verfahren zur Schmierung von volumetrisch arbeitenden Expansionsmaschinen bereitzustellen, in dem die oben genannten Probleme ausgeräumt oder zumindest gemildert werden.

### Beschreibung der Erfindung

Die oben genannte Aufgabe wird gelöst durch das Verfahren zur Schmierung einer Expansionsmaschine, das die folgenden Schritte umfasst:
Liefern eines ein Schmiermittel enthaltenden, dampfförmigen Arbeitsmediums von einem Verdampfer;
Abscheiden eines Teils des Schmiermittels aus dem von dem Verdampfer gelieferten, dampfförmigen Arbeitsmedium; und
Liefern des durch das Abscheiden des einen Teils des Schmiermittels von dem Schmiermittel abgereicherten Arbeitsmediums an die Expansionsmaschine;
wobei
das Liefern des das Schmiermittel enthaltenden, dampfförmigen Arbeitsmediums von dem Verdampfer in der Art erfolgt, dass das Schmiermittel in dem von dem Verdampfer gelieferten Arbeitsmedium in Form von Öltröpfchen vorliegt; und
das Liefern des durch das Abscheiden des einen Teils des Schmiermittels von dem Schmiermittel abgereicherten Arbeitsmediums an die Expansionsmaschine (30) in der Art erfolgt, dass das in dem abgereicherten Arbeitsmedium verbleibende Schmiermittel aufeinander abwälzende oder gleitende Teile der Arbeitskammer der Expansionsmaschine (30) schmiert.

Im Gegensatz zum Stand der Technik wird erfindungsgemäß zumindest ein Teil des Schmiermittels aus dem von dem Verdampfer gelieferten Arbeitsmediums abgeschieden. Im Stand der Technik hingegen geschieht diese Abscheidung aus dem die Expansionsmaschine verlassenden Arbeitsmedium. Das Vorsehen einer Ölkreispumpe erübrigt sich in dem erfindungsgemäßen Verfahren. Auch kann eine zur Abscheidung zumindest eines Teils des Schmiermittels des aus dem von dem Verdampfer gelieferten Arbeitsmediums verwendete Schmiermittelabscheidevorrichtung im Vergleich zum Stand der Technik kleiner ausgebildet werden, da die Trennung des Schmiermittels aus dem Frischdampf statt aus dem Abdampf erfolgt. Weiterhin wird die Frischdampftemperatur/-enthalpie erfindungsgemäß nicht unerwünschterweise durch Hinzufügen eines relativ kalten Schmiermittels herabgesenkt.

Gemäß einer Weiterbildung umfasst das erfindungsgemäße Verfahren das Liefern zumindest eines Teils des abgeschiedenen Schmiermittels an die Expansionsmaschine. Während ein in dem der Expansionsmaschine zugeführten Arbeitsmedium verbleibender Anteil des Schmiermittels der Schmierung aufeinander abwälzender oder gleitender Teile der Arbeitskammer der volumetrisch arbeitenden Expansionsmaschine dient, wird gemäß dieser Weiterbildung zumindest ein Teil des abgeschiedenen Schmiermittels an Schmierstellen der Expansionsmaschine geliefert.

Das erfindungsgemäße Verfahren kann vorteilhafterweise zur Schmierung einer volmetrisch arbeitenden Expansionsmaschine einer Organic Rankine Cycle (ORC) - Anlage eingesetzt werden. Somit kann das Arbeitsmedium in Form eines organischen Arbeitsmediums bereitgestellt werden. Fluorierte Kohlenwasserstoffe können beispielsweise als Arbeitsmedium dienen. Erfindungsgemäß liegt das Schmiermittel in dem von dem Verdampfer gelieferten ein Schmiermittel enthaltenden Arbeitsmedium im flüssigen Zustand in Form von Öltröpfchen, die mit dem Dampf des Arbeitsmediums mitgerissen werden, vor. Die Öltröpfchen werden dann zumindest zum Teil durch eine Schmiermittelabscheidevorrichtung aus dem Arbeitsmedium, bevor es in die Expansionsmaschine eintritt, abgeschieden und gesammelt, so dass sie an Schmierstellen der Expansionsmaschine geliefert werden können. Das Schmiermittel in Form von Öltröpfchen kann beispielsweise synthetischer Ester sein (s. auch detaillierte Beschreibung unten).

Da das Schmiermittel zusammen mit dem Arbeitsmedium den Verdampfer passiert, weist es nach Abscheiden aus dem im wesentlichen dampfförmigen Arbeitsmedium eine hohe Temperatur auf, so dass es, wenn es sich in der Schmiermittelabscheidevorrichtung sammelt, unter einem relativ hohen Druck steht. Dieser hohe Druck führt dazu, dass es frei, und insbesondere ohne durch eine separate Pumpvorrichtung gepumpt werden zu müssen, zu Schmierstellen der Expansionsmaschine, etwa zu schmierenden Lagern, strömen kann.

Andererseits ist, wie bereits erwähnt, das von der Schmiermittelabscheidevorrichtung an die Schmierstellen der Expansionsmaschine gelieferte Schmiermittel relativ heiß. Da es jedoch vorteilhafterweise auch zum Abtransport von Wärme von den Schmierstellen der Expansionsmaschine weg verwendet werden kann, umfasst das erfindungsgemäße Verfahren gemäß einem Beispiel das Abkühlen des abgeschiedenen Schmiermittels vor der Lieferung an die Schmierstellen der Expansionsmaschine.

Hierbei kann die Wärme des Schmiermittels (zum Beispiel eines Schmieröls) direkt an ein Kühlmedium (z.B. Luft) abgegeben werden. Die Wärme kann direkt vom Rohr, in dem das Schmiermittel an die Schmierstellen der Expansionsmaschine geliefert wird, an die Umgebungsluft gehen, oder man verbessert den Wärmeübergang z.B. durch eine Berippung des Rohrs. Die Wärme steht in diesem Fall dem Prozess nicht mehr zur Verfügung.

Eine andere Möglichkeit stellt die Verwendung des kalten Arbeitsmediums zur Kühlung dar. Hierbei kann vorgesehen werden, dass das Schmiermittel und das Arbeitsmedium durch einen Wärmeübertrager strömen. Die Wärme geht dann vom Schmiermittel an das kalte Arbeitsmedium vor dem Liefern desselben an den Verdampfer über und steht somit dem Prozess wieder zur Verfügung.

Die Abkühlung des an die Schmierstellen der Expansionsmaschine gelieferten abgeschiedenen Schmiermittels kann also zumindest teilweise mithilfe des an den Verdampfer gelieferten das Schmiermittel enthaltenden Arbeitsmediums erfolgen. Das Arbeitsmedium liegt vor dem Verdampfer in flüssiger Form vor und weist darin gelöst das Schmiermittel auf. In dieser Form ist es verglichen mit dem Zustand nach dem Verdampfer relativ kühl. Somit kann es beispielsweise zumindest teilweise durch Kühlrippen geführt werden, die um eine Leitung vorgesehen sind, in der das abgeschiedene Schmiermittel zu den Schmierstellen der Expansionsmaschine strömt, und es kann so das Schmiermittel auf dem Transportweg zur Expansionsmaschine kühlen.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen.
Figur 1 stellt ein Schmiersystem für eine volumetrische Expansionsmaschine gemäß dem Stand der Technik dar.
Figur 2 veranschaulicht beispielhaft ein Schmiersystem für für ein Verfahren zum Schmieren einer volumetrischen Expansionsmaschine gemäß der vorliegenden Erfindung.

Wie es in Figur 2 gezeigt ist, umfasst ein Schmiersystem zum Schmieren einer volumetrischen Expansionsmaschine gemäß einem Beispiel für die vorliegende Erfindung eine Schmiermittelabscheidevorrichtung (im weiteren beispielhaft einen Ölabscheider) 10, der einem Verdampfer 20, der ein vollständig oder teilweise verdampftes Arbeitsmedium liefert, und einer Expansionsmaschine 30, die in Zusammenwirken mit einem Generator 40 der Gewinnung elektrischer Energie dient, zwischengeschaltet ist. Während im Stand der Technik, wie es oben mit Bezug auf Figur 1 beschrieben ist, eine Abscheidung des Schmiermittels aus dem Abdampfstrom erfolgt, wird erfindungsgemäß zumindest ein Teil des Schmiermittels aus dem der Expansionsmaschine 30 zugeführten Frischdampf des mit dem Schmiermittel versetzten Arbeitsmediums abgeschieden. In dem Ölabscheider 10 können entsprechende Abscheidebleche derart vorgesehen werden, dass in dem an der Expansionsmaschine 30 anlangenden Arbeitsmedium noch eine hinreichende Menge an Schmiermittel (Schmieröl) vorhanden ist, so dass eine zuverlässige Schmierung aufeinander abwälzender oder gleitender Teile der Arbeitskammer der volumetrisch arbeitenden Expansionsmaschine 30 erreicht werden kann. Alternativ könnte die Abscheidung des Schmiermittels in dem Ölabscheider 10 im wesentlichen vollständig erfolgen und eine geeignete Menge an Schmiermittel dem Frischdampf des Arbeitsmediums vor Eintritt in die Expansionsmaschine 30 wieder zugeführt werden.

In dem Ölabscheider 10 sammelt sich das abgeschiedene Schmieröl. Da es nach dem Durchströmen durch den Verdampfer gemeinsam mit dem Arbeitsmedium auf eine hohe Temperatur gebracht worden ist, steht es in dem Ölabscheider 10 unter hohem Druck, so dass es über eine entsprechende Leitung frei zu der Expansionsmaschine 30 strömen kann, um dort entsprechende Schmierstellen derselben zu schmieren. Neben der Lagerschmierung kann es auch Verlustwärme von den Lagern weg transportieren. Hierzu kann es vorteilhaft sein, das Schmieröl vor oder während des Transports zu den Schmierstellen der Expansionsmaschine 30 zu kühlen. Diese Kühlung kann beispielsweise mithilfe von Kühlrippen erfolgen, die um die Rohrleitung zu den Schmierstellen der Expansionsmaschine 30 hin vorgesehen werden. Eine Kühlung kann auch durch eine Wärmekopplung an das von der Speisepumpe 50 rückgeführten Arbeitsmediums, das nach Expansion in der Expansionsmaschine 30 zur Kondensation einen Kondensator 60 durchläuft, erfolgen. Die Wärme kann alternativ direkt von der Rohrleitung, in der das Schmiermittel an die Schmierstellen der Expansionsmaschine geliefert wird, an die Umgebungsluft gehen. Gemäß einer weiteren Alternative kann vorgesehen werden, dass das Schmiermittel und das Arbeitsmedium durch einen Wärmeübertrager strömen. Die Wärme geht dann vom Schmiermittel an das kalte Arbeitsmedium über.

Beispielhaft liegt das Schmiermittel in dem Arbeitsmedium, wenn es dem Verdampfer 20 durch die Speisepumpe 50 zugeführt wird, in gelöster Form vor. Dieses kann durch eine geeignete Wahl des Arbeitsmediums und des Schmiermittels erreicht werden. Beispielsweise kann das Arbeitsmedium in Form eines fluorierten Kohlenwasserstoffes, z.B. R134a, R245fa, und das Schmiermittel in Form eines synthetischen Esters, z.B. eines Öls aus der Reihe Reniso Triton SE / SEZ des Anbieters Fuchs, bereitgestellt werden, wobei zu beachten ist, dass keine Mischungslücke mit entsprechender Phasentrennung von Arbeitsmedium und Schmiermittel in dem betriebsbedingten Temperaturbereich auftritt. Das Schmieröl wird eine gegenüber dem Arbeitsmedium deutlich erhöhte Siedetemperatur aufweisen, so dass es nach dem Durchgang durch den Verdampfer 20 flüssig in Tröpfchenform in dem Arbeitsdampf des Arbeitsmediums vorliegt.

Da gemäß dem beschriebenen Beispiel das in dem Ölabscheider 10 abgeschiedene Schmieröl unter hohem Druck steht, so dass es frei durch den Druck verursacht zu der Expansionsmaschine 30 strömen kann, besteht keine Notwendigkeit für das Bereitstellen einer weiteren Pumpeinrichtung für das Schmiermittel. Zudem fließt im Vergleich zum Stand der Technik ein geringeres Volumen pro Zeit durch den Ölabscheider 10, so dass dieser vergleichsweise kompakt ausgebildet werden kann, woraus sich eine Raumersparnis und Kostenersparnis ergeben. Weiterhin wird der Druckverlust nach der Expansionsmaschine 30 verringert und es kann so das Druckgefälle über die Expansionsmaschine 30 im Vergleich zur herkömmlichen Konfiguration mit einem der Expansionsmaschine 30 nachgeordneten Ölabscheider 10 vergrößert werden, so dass der Wirkungsgrad der Expansionsmaschine 30 erhöht werden kann. Zudem verbleibt Schmiermittel direkt im Frischdampf des Arbeitsmediums bzw. wird es diesem bei Frischdampftemperatur zugeführt, so dass im Gegensatz zum Stand der Technik die Verwendung eines Schmiermittels nicht zu einer Absenkung der Frischdampftemperatur und -enthalpie führt.

Weiterhin verbessert die erfindungsgemäße Schmierung einer volumetrisch arbeitenden Expansionsmaschine signifikant das Anlaufverhalten einer ORC-Anlage. Beim Anfahren der ORC-Anlage wird ein kaltes Arbeitsmedium dem Verdampfer 20 zugeführt, in dem durch Verdampfung ein thermischer Druck aufgebaut wird. Der Dampf wird im Rahmen des Anfahrvorgangs über eine Bypassleitung (nicht in Figur 2 gezeigt) dem Kondensator 60 zugeführt. Ebenso wird ein flüssiges Schmiermittel, beispielsweise ein Schmieröl aus dem Ölabscheider 10, dem Kondensator zugeführt. Das verflüssigte Arbeitsmedium sowie das Schmieröl fließen in einen Speisebehälter, von dem es durch die Speisepumpe 50 an den Verdampfer 20 geliefert wird. Das Schmieröl kann auch zur Lösung in dem Arbeitsmedium direkt in den Speisebehälter geliefert werden. Somit kann zeitsparend der gesamte zur Verfügung gestellte Schmiermittelvorrat durch den Verdampfer geführt und auf Betriebstemperatur gebracht werden.

## Patentansprüche

1. Verfahren zur Schmierung einer Expansionsmaschine (30), umfassend Liefern eines ein Schmiermittel enthaltenden, dampfförmigen Arbeitsmediums von einem Verdampfer (20);
Abscheiden eines Teils des Schmiermittels aus dem von dem Verdampfer (20) gelieferten, dampfförmigen Arbeitsmedium; und
Liefern des durch das Abscheiden des einen Teils des Schmiermittels von dem Schmiermittel abgereicherten Arbeitsmediums an die Expansionsmaschine (30); **dadurch gekennzeichnet, dass**
das Liefern des das Schmiermittel enthaltenden, dampfförmigen Arbeitsmediums von dem Verdampfer (20) in der Art erfolgt, dass das Schmiermittel in dem von dem Verdampfer (20) gelieferten Arbeitsmedium in Form von Öltröpfchen vorliegt; und
das Liefern des durch das Abscheiden des einen Teils des Schmiermittels von dem Schmiermittel abgereicherten Arbeitsmediums an die Expansionsmaschine (30) in der Art erfolgt, dass das in dem abgereicherten Arbeitsmedium verbleibende Schmiermittel aufeinander abwälzende oder gleitende Teile der Arbeitskammer der Expansionsmaschine (30) schmiert.

2. Das Verfahren gemäß Anspruch 1, weiterhin das Liefern zumindest eines Teils des abgeschiedenen Schmiermittels an die Expansionsmaschine (30).

3. Das Verfahren gemäß einem der vorhergehenden Ansprüche, in dem das Arbeitsmedium in Form eines organischen Arbeitsmediums bereitgestellt wird.

4. Das Verfahren gemäß einem der vorhergehenden Ansprüche, in dem das abgeschiedene Schmiermittel sich in einem Teil einer Schmiermittelvorrichtung (10) unter Druck sammelt und dann von diesem Teil aus aufgrund des Drucks, insbesondere ohne gepumpt zu werden, zu Schmierstellen der Expansionsmaschine (30) strömt.

5. Das Verfahren gemäß Anspruch 4, weiterhin das Abkühlen des abgeschiedenen Schmiermittels vor der Lieferung an die Schmierstellen der Expansionsmaschine (30) umfassend.

6. Das Verfahren gemäß Anspruch 5, in dem die Abkühlung des an die Schmierstellen der Expansionsmaschine (30) gelieferten abgeschiedenen Schmiermittels mithilfe des an den Verdampfer (20) gelieferten das Schmiermittel enthaltenden Arbeitsmediums erfolgt.

7. Das Verfahren gemäß einem der vorhergehenden Ansprüche, in dem das Arbeitsmedium einen fluorierten Kohlenwasserstoff umfasst oder daraus besteht und das Schmiermittel einen synthetischen Ester umfasst oder daraus besteht.

## Claims

1. Method for lubricating an expansion machine (30), comprising
supplying of a vaporous operating medium which contains a lubricant by a vaporizer (20),
separating of a part of the lubricant from the vaporous operating medium which is supplied by the vaporizer (20); and
supplying of the operating medium which is depleted by the separation of the one part of the lubricant from the lubricant to the expansion machine (30),
**characterized in**
**that** supplying of the vaporous operating medium containing the lubricant by the vaporizer (20) is carried out such that the lubricant is present in the form of oil droplets in the operating medium supplied by the vaporizer (20); and
supplying of the operating medium which is depleted by separation of the one part of the lubricant from the lubricant to the expansion machine (30) is carried out such that the lubricant remaining in the depleted operating medium lubricates parts of the working chamber of the expansion machine (30) that roll or slide on each other.

2. Method according to claim 1, furthermore comprising supplying of at least a part of the separated lubricant to the expansion machine (30).

3. Method according to one of the preceding claims, wherein the operating medium is provided in the form of an organic operating medium.

4. Method according to one of the preceding claims, wherein the separated lubricant is collected in a part of a lubrication device (10) under pressure and then flows, due to said pressure, in particular without being pumped, from this part to lubrication points of the expansion machine (30).

5. Method according to claim 4, furthermore comprising cooling down the separated lubricant before it is supplied to the lubrication points of the expansion machine (30).

6. Method according to claim 5, wherein the cooling down of the separated lubricant supplied to the lubrication points of the expansion machine (30) is effected with the aid of the operating medium which contains the lubricant and which is supplied to the vaporizer (20).

7. Method according to one of the preceding claims, wherein the operating medium comprises a fluorinated hydrocarbon or consists of the latter, and the lubricant comprises a synthetic ester or consists of the latter.

## Revendications

1. Procédé de lubrification d'une machine de détente (30) comprenant
la fourniture, à partir d'un évaporateur (20), d'un fluide de travail sous forme de vapeur, renfermant un lubrifiant ;
la séparation d'une partie du lubrifiant du fluide de travail sous forme de vapeur fourni par l'évaporateur (20) ;
la fourniture à la machine de détente (30), du fluide de travail appauvri en lubrifiant par la séparation de ladite une partie du lubrifiant ;
**caractérisé en ce que**
la fourniture, à partir de l'évaporateur (20), du fluide de travail sous forme de vapeur, renfermant le lubrifiant, s'effectue de manière à ce que le lubrifiant soit présent sous forme de gouttelettes d'huile dans le fluide de travail fourni par l'évaporateur (20) ; et
la fourniture à la machine de détente (30), du fluide de travail appauvri en lubrifiant par la séparation de ladite une partie du lubrifiant, s'effectue de manière à ce que le lubrifiant restant dans le fluide de travail appauvri, assure la lubrification de pièces de la chambre de travail de la machine de détente (30), qui roulent ou glissent les unes sur les autres.

2. Le procédé selon la revendication 1, comprenant en outre la fourniture d'au moins une partie du lubrifiant séparé à la machine de détente (30).

3. Le procédé selon l'une des revendications précédentes, d'après lequel le fluide de travail est préparé sous la forme d'un fluide de travail organique.

4. Le procédé selon l'une des revendications précédentes, d'après lequel le lubrifiant ayant été séparé s'accumule sous pression dans une partie d'un dispositif de lubrification (10), et s'écoule ensuite à partir de cette partie, en raison de la pression, notamment sans être pompé, vers des zones à lubrifier de la machine de détente (30).

5. Le procédé selon la revendication 4, comprenant, en outre, le refroidissement du lubrifiant ayant été séparé, avant la fourniture aux zones à lubrifier de la machine de détente (30).

6. Le procédé selon la revendication 5, d'après lequel le refroidissement du lubrifiant ayant été séparé et fourni aux zones à lubrifier de la machine de détente (30), est effectué à l'aide du fluide de travail renfermant le lubrifiant, fourni à l'évaporateur (20).

7. Le procédé selon l'une des revendications précédentes, d'après lequel le fluide de travail comprend un hydrocarbure fluoré ou en est constitué, et le lubrifiant comprend un ester synthétique ou en est constitué.
